# EUROPÄISCHE PATENTSCHRIFT

(11) **EP 1 180 474 B1**
(45) Veröffentlichungstag und Bekanntmachung des Hinweises auf die Patenterteilung: **22.10.2008**
(21) Anmeldenummer: 01118573.3
(22) Anmeldetag: 02.08.2001
(51) Int. Cl.: B62D 61/12, B60G 5/00

(54) **Liftbare Achse eines Nutzfahrzeuges**
Axle for an utility vehicle
Essieu pour véhicule utilitaire

(30) Priorität: 19.08.2000 DE 10040656
(43) Veröffentlichungstag der Anmeldung: 20.02.2002
(73) Patentinhaber: MAN Nutzfahrzeuge Aktiengesellschaft, 80976 München (DE)
(72) Erfinder: Neukam, Michael, Dipl.-Ing., 82110 Germering (DE); Mendler, Harry, 88317 Aichstetten (DE); Stummer, Josef, Dipl.-Ing., 85716 Unterschleissheim (DE)

(56) Entgegenhaltungen:
- WO-A-99/55576
- DE-C- 928 813

## Beschreibung

Die Erfindung bezieht sich auf eine liftbare Achse eines Nutzfahrzeuges, insbesondere eines Lastkraftwagens oder Omnibusses, gemäß dem Oberbegriff des Anspruches 1.

Aus der DT 1 655 108 ist ein Lastkraftwagen mit einer liftbaren Achse bekannt, welche mittels eines einzigen, an eine fahrzeuginterne Luftversorgung angeschlossenen Liftbalg angehoben und abgesenkt werden kann. Der Liftbalg ist dabei unten von einem beide Rahmenlängsträger des Lastkraftwagens verbindenden Querträger abgestützt und untergreift seinerseits zwecks Anhebung der liftbaren Achse einen gelenkig an dieser angebundenen Dreieckslenker. Dieser ist anderenendes mit seinen gleichlangen Armen gelenkig an den beiden, den Fahrzeugrahmen bildenden Rahmenlängsträgem angebunden.

Aus der WO 9955576 ist ebenfalls ein Lastkraftwagen mit einer liftbaren Achse bekannt, welche mittels eines einzelnen Liftbalges anhebbar ist. Der einzelne Liftbalg stützt sich unten auf einen beide Rahmenlängsträger des Lastkraftwagens verbindenden Querträger ab und ist oben mit einer Quertraverse eines Dreieckslenkers verbunden. Der Dreieckslenker ist mit seinen beiden gleichlangen Armen rahmenseitig angelenkt und andernendes gelenkig über einen Bock an der liftbaren Achse befestigt.

Der Erfindung liegt die Aufgabe zugrunde, den baulichen Aufwand und den Raumbedarf für die Ausführung einer einer weiteren Achse eines Nutzfahrzeuges zugeordneten liftbaren Achse zu minimieren.

Diese Aufgabe wird erfindungsgemäß durch die Merkmale des Anspruches 1 gelöst.

Somit ist erfindungsgemäß eine liftbare Achse eines Nutzfahrzeuges, insbesondere eines Lastkraftwagens oder eines Omnibusses gegeben, die einer weiteren Achse vor- oder nachgeordnet und mittels eines einzigen Liftbalges liftbar ist, welcher unten an einem rahmenfesten Träger und oben gegen einen Dreieckslenker abgestützt ist, dessen beide Schenkel an ihren freien Enden am Rahmen des Nutzfahrzeuges und mit ihrem gemeinsamen Knotenpunkt an der liftbaren Achse angelenkt sind. Dabei ist die liftbare Achse durch folgende Merkmale gekennzeichnet, dass die beiden Schenkel des Dreieckslenkers asymmetrisch zur Mittellängsachse des Nutzfahrzeuges angeordnet sind, dass der gemeinsame Knotenpunkt der beiden Schenkel des Dreieckslenkers außermittig - zu einem der beiden Rahmenlängsträger hingerückt - angeordnet ist, dass der Dreieckslenker mit seinem Knotenpunkt außermittig an der liftbaren Achse angelenkt ist, dass der Liftbalg in bezug auf die Mittellängsachse des Nutzfahrzeuges außermittig angeordnet ist, dass der Liftbalg unten am Quersteg eines winkelartigen Trägers abgestützt, welcher nur an einem der beiden Rahmenlängsträger, insbesondere jenem befestigt ist, zu dem der Knotenpunkt des Dreieckslenkers hingerückt ist, und dass der Liftbalg oben an einer die beiden Schenkel des Dreieckslenkers verbindenden Quertraverse angeschlossen ist. Die Quertraverse kann fest oder lösbar mit den beiden Schenkeln des Dreieckslenkers verbunden sein.

Somit ist in vorteilhafter Weise eine baulich vereinfachte und hinsichtlich ihres Raumbedarfes optimierte, liftbare Achse gegeben, welche mit einem einzelnen Liftbalg auskommt, welcher von einem bereits vorhandenen, fahrzeuginternen Druckluftsystem versorgbar ist. Eine den Motor bzw. das Getriebe des Nutzfahrzeuges mit einer rückwärtig desselben vorgesehenen Antriebsachse verbindende Antriebswelle hat somit ausreichenden Freigang und es entsteht für diese keine Kollisionsgefahr mit anderen, räumlich konkurrierenden Bauteilen in diesem Anordnungsbereich des Nutzfahrzeuges. Ebenfalls baulich wie räumlich vorteilhaft erweist sich die außermittig des Nutzfahrzeugrahmens erfolgende Abstützung des einzigen Liftbalges an einem einzelnen, rahmenfesten Liftbalgträger.

In vorteilhafter Weise kann aufgrund der speziellen räumlichen Anordnung und Ausgestaltung von Liftbalgträger und Dreieckslenker eine bezüglich beiden Rahmenlängsträgern asymmetrisch verlaufende Antriebswelle vorgesehen sein.

Gemäß einer weiteren Ausgestaltung der Erfindung kann der Dreieckslenker in einer Ebene parallel und oberhalb zu einer Ebene unterer Längslenker angeordnet sein, welche die liftbare Achse in Fahrzeuglängsrichtung anlenken.

Gemäß einer weiteren Ausgestaltung der Erfindung kann der Dreieckslenker mit den freien Enden seiner beiden Schenkel entweder an den Rahmenlängsträgern oder an einem diese miteinander verbindenden Querträger angelenkt sein.

Gemäß einer weiteren Ausgestaltung der Erfindung kann der die Rahmenlängsträger miteinander verbindende Querträger zusätzlich an Längslenkerböcken angeschlossen sein, welche die unteren Längslenker der liftbaren Achse lagern.

Alternativ hierzu kann der Dreieckslenker mit den freien Enden seiner beiden Schenkel an den Längslenkerböcken selbst angeschlossen sein. Auf diese Weise kann in vorteilhafter Weise ein Bauteil eingespart werden. Gegebenenfalls kann die gelenkige Anbindung der beiden ungleichen Schenkel des Dreieckslenkers entweder am Querträger und/oder an den beiden Rahmenlängsträgern und/oder auf den hieran befestigten Längslenkerböcken erfolgen.

Gemäß einer weiteren Ausgestaltung der Erfindung kann der winkelartige Träger zusammen mit einem rahmenfesten Luftbalgträger, welcher für die Halterung eines die Achse federnd abstützenden Luftbalges vorgesehen ist, ein gemeinsames Bauteil bilden. Somit kann ebenfalls in vorteilhafter Weise ein Bauteil eingespart werden.

Gemäß einer weiteren Ausgestaltung der Erfindung kann auf der liftbaren Achse außermittig ein Achsenbock angeordnet sein, an dessen Oberseite der Knotenpunkt des Dreieckslenkers angelenkt ist.

Gemäß einer weiteren Ausgestaltung der Erfindung kann die die beiden Schenkel des Dreieckslenkers verbindende Quertraverse durch eine untere Halteplatte gebildet sein, welche lösbar oder fest entweder mit einer Oberseite des Liftbalges oder den Schenkeln des Dreieckslenkers verbunden ist und mit einer die Schenkel fixierenden oberen Halteplatte zusammenwirkt.

Gemäß einer weiteren Ausgestaltung der Erfindung kann die untere Halteplatte und/oder die obere Halteplatte formschlüssige Aufnahmen zur Fixierung der Schenkel des Dreieckslenkers aufweisen. Die obere Halteplatte kann lösbar mit einer unteren Halteplatte verbunden sein. Zwecks Fixierung des Dreieckslenkers auf der unteren Halteplatte können die Schenkel bereichsweise von der oberen Halteplatte überdeckt sein.

Gemäß einer weiteren Ausgestaltung der Erfindung kann die liftbare Achse entweder eine Vorlaufachse, eine Nachlaufachse oder eine liftbare Achse eines Doppelachsaggregates sein, welche einer weiteren Achse desselben entweder vor- oder nachgeordnet ist.

Gemäß einer weiteren Ausgestaltung der Erfindung kann anstelle eines Liftbalges ein Hydraulikzylinder verwendet sein, der von einem Hydrauliksystem des Nutzfahrzeuges her versorgbar ist.

Nachstehend ist die erfindungsgemäße Lösung anhand eines in der Zeichnung dargestellten Ausführungsbeispieles noch näher erläutert.

In der Zeichnung zeigen:
- Fig. 1: ausschnittsweise in Draufsicht eine anhebbare Vorlaufachse eines Doppelachsaggregates eines Nutzfahrzeuges,
- Fig. 2: teilweise schematisch eine Vorderansicht einer anhebbaren Vorlaufachse gemäß Fig. 1,
- Fig. 3: teilweise schematisch eine Seitenansicht einer liftbren Achse gemäß Fig. 1,
- Fig. 4: in perspektivischer Explosionsdarstellung einen einzelnen, winkelartigen Träger für einen außermittig des Rahmens des Nutzfahrzeuges anzuordnenden Liftbalg,
- Fig. 5: in perspektivischer Explosionsdarstellung eine untere Halteplatte zur Fixierung eines asymmetrischen Dreieckslenkers,
- Fig. 6: in Draufsicht eine obere Halteplatte in Ergänzung der unteren Halteplatte gemäß Fig. 5 zur Halterung des Dreieckslenkers.

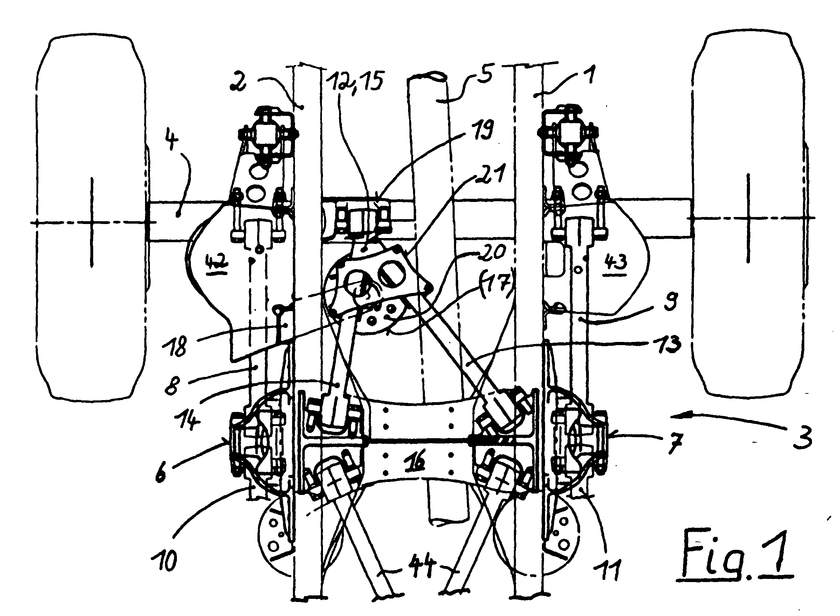

In Fig. 1 ist ausschnittsweise eine Draufsicht auf eine liftbare Achse 4 - hier eines Doppelachsaggregates 3 eines Nutzfahrzeuges - gezeigt. Als Nutzfahrzeug können Lastkraftwagen oder Omnibusse vorgesehen sein. Die liftbare Achse 4 ist in der hier gezeigten Version eine ungelenkte, nicht angetriebene Vorlaufachse eines Doppelachsaggregates 3. Gemäß einer anderen, hier nicht gezeigten Version kann die liftbare Achse beispielsweise eine Nachlaufachse sein, oder allgemein eine zusätzliche liftbare Achse, welche einer weiteren Achse eines Nutzfahrzeuges vor - oder nachgeordnet ist und gegebenenfalls antreibbar und/oder lenkbar ausgeführt ist. Die hier dargestellte liftbare Achse 4 ist über untere Längslenker 8, 9 gelenkig an Längslenkerböcken 6, 7 des Doppelachsaggregates 3 an Rahmenlängsträgern 1, 2 des Nutzfahrzeuges angebunden. Des weiteren ist die liftbare Achse 4 über einen außermittig an ihr befestigten Achsenbock 19 im Bereich eines gemeinsamen Knotenpunktes 15 zweier Schenkel 13, 14 eines asymmetrischen Dreieckslenkers 12 gelenkig angebunden, welcher seinerseits über seine freien Enden seiner ungleichlangen Schenkel 13, 14 an rahmennahen Endbereichen eines beide Rahmenlängsträger 1, 2 verbindenden Querträgers 16 gelenkig angeschlossen ist. In diesem Ausführungsbeispiel ist der Querträger 16 in vorteilhafter Weise im Bereich der Längslenkerböcke 6, 7 zwischen den beiden Rahmenlängsträgern 1, 2 angeordnet. Alternativ hierzu können die freien Enden der beiden Schenkel 13, 14 des Dreieckslenkers 12 an allen möglichen rahmenfesten Punkten, beispielsweise an den Rahmenlängsträger 1, 2 selbst und/oder dem Querträger 16 und/oder den Längslenkerböcken 13, 6 gelenkig angeordnet sein.

Des weiteren ist zusätzlich zu der liftbaren Achse 4 eine hier nicht näher beschriebene zweite Achse des Doppelachsaggregates 3 über entsprechende Längslenker 10, 11 und einen Dreieckslenker 44 an den Längslenkerböcken 6, 7 bzw. dem Querträger 16 angelenkt.

Grundsätzlich ist die liftbare Achse 4 über einen einzigen, außermittig bezüglich einer Mittellängsachse des Nutzfahrzeuges an dem Rahmenlängsträger 2 über einen winkelartigen Träger 18 gehalterten Liftbalg 17 liftbar. Dabei stützt sich der Liftbalg 17 oben an einer die beiden Schenkel 13, 14 des Dreieckslenkers 12 verbindenden Quertraverse 20 ab, die hier als eine untere Halteplatte 20 ausgebildet ist, die die beiden ungleichen Schenkel 13, 14 des Dreieckslenkers 12 im Bereich ihres gemeinsamen Knotenpunktes 15 zumindest bereichsweise formschlüssig untergreift. Des weiteren ist zur Fixierung des Dreieckslenkers 12 an der Oberseite der unteren Halteplatte 20 eine mit dieser korrespondierende obere Halteplatte 21 vorgesehen. Anstelle der beiden Halteplatten 20, 21 können auch andere, hierfür geeignete Bauteile vorgesehen sein, welche zumindest bereichsweise eine formschlüssige Aufnahme der Schenkel 13, 14 des Dreieckslenkers 12 bewerkstelligen.

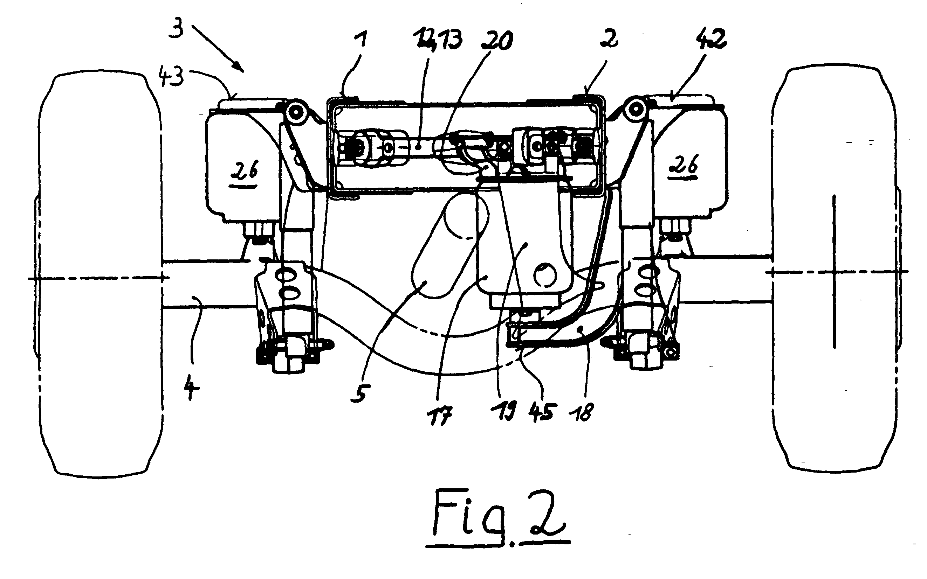

In Fig. 2 ist in teilweiser Schematisierung eine Vorderansicht einer liftbaren Achse 4 gemäß Fig. 1 gezeigt. Die Achse 4 ist in dieser Version in gekröpfter Ausführung dargestellt, kann jedoch in beliebig anderer Ausführungsform realisiert sein. Der die Achse 4 über den Dreieckslenker 12 anhebende Liftbalg 17 ist unterseitig von dem einzelnen, am Rahmenlängsträger 2 befestigten winkelartigen Träger 18 untergriffen und gehalten. Die im Bereich des Knotenpunktes 15 des asymmetrischen Dreieckslenkers 12 realisierte Anlenkung ist durch den mit der Achse fest verbundenen Achsenbock 19 bewerkstelligt, welcher hier nur schemenhaft angedeutet ist.

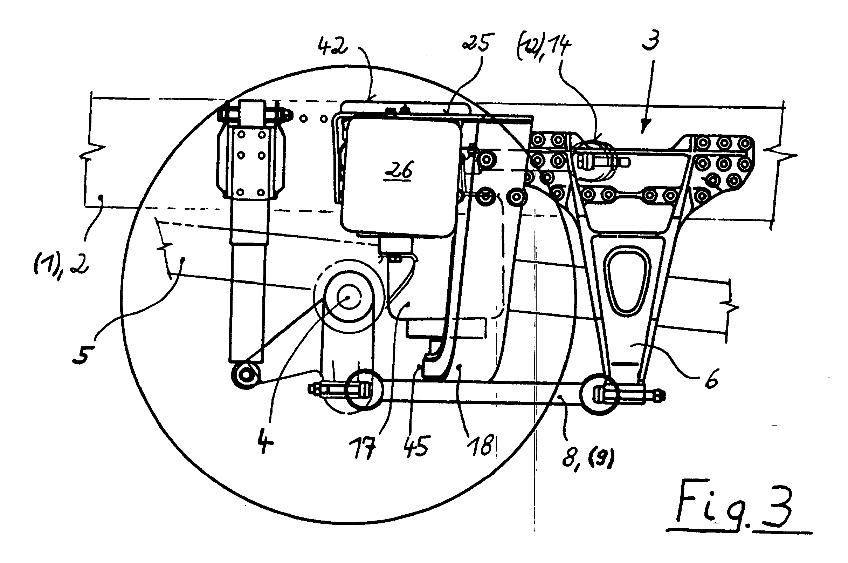

In Fig. 3 ist ausschnittsweise eine Seitenansicht des Doppelachsaggregates 3 gemäß Fig. 1 gezeigt. Die liftbare Achse 4 ist über die unteren Längslenker 8, 9 an dem Längslenkerbock 6 des Doppelachsaggregates 3 in einem unteren Bereich gelenkig angebunden. In einem oberseitigen Bereich der Achse 4 erfolgt deren Anlenkung mittelbar über den hier nur andeutungsweise skizzierten Dreieckslenker 12. Der die Anhebung und Absenkung der Achse 4 bewerkstelligende Liftbalg 17 stützt sich unten an einem Quersteg 4, 5 des winkelartigen Trägers 18 ab, welcher in der hier gezeigten Version an einem vertikalen Mittelsteg des Rahmenlängsträgers 2 befestigt ist. In der hier gezeigten Version bildet der winkelartige Träger 18 mit seinem Horizontalabschnitt 25 zugleich eine Abstützung für einen die liftbare Achse 4 abstützenden Luftfederbalg 26, wodurch ein weiteres Bauteil einsparbar ist. Die bezüglich der beiden Rahmenlängsträger 1, 2 des Fahrzeugrahmens asymmetrisch verlaufende Antriebsachse 5 ist hier lediglich schematisch dargestellt.

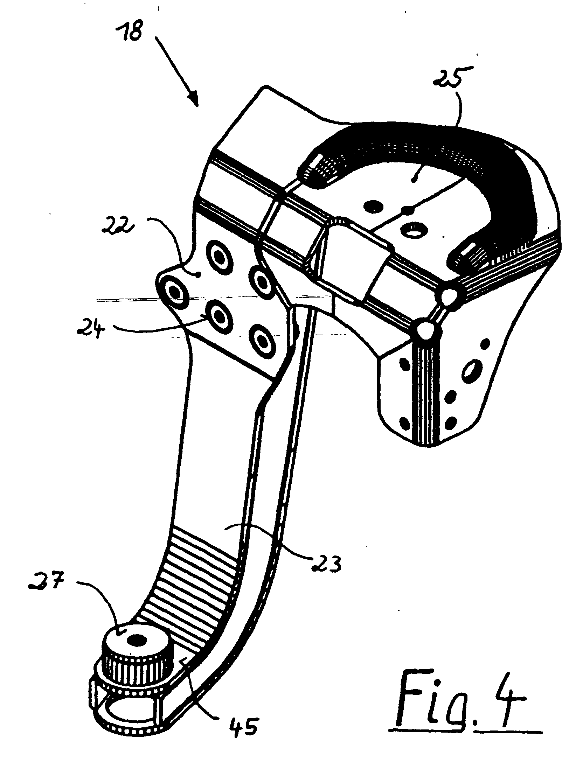

In Fig. 4 ist in perspektivischer Explosionsdarstellung von schräg oben der winkelartige Träger 18 gezeigt. Dieser weist im Bereich seines Unterteiles 23 einen Quersteg 45 mit einem Aufnahmezapfen 27 auf, welcher den hier nicht gezeigten Liftbalg unterseitig aufnimmt. Des weiteren weist der winkelartige Träger 18 den in Fig. 3 bereits genannten Horizontalabschnitt 25 auf, welcher mit seiner Unterseite zugleich die Oberseite eines die liftbare Achse 4 abstützenden, hier nicht gezeigten Luftfederbalges 26 abstützen kann. In einem oberen Horizontalbereich 22 des Trägers 18 sind horizontal verlaufende Bohrungen 24 vorgesehen, welche zwecks Halterung des Trägers 18 am Rahmenlängsträger 2 mit hierin eingebrachten Bohrungen zur Aufnahme von Befestigungsmitteln korrespondieren.

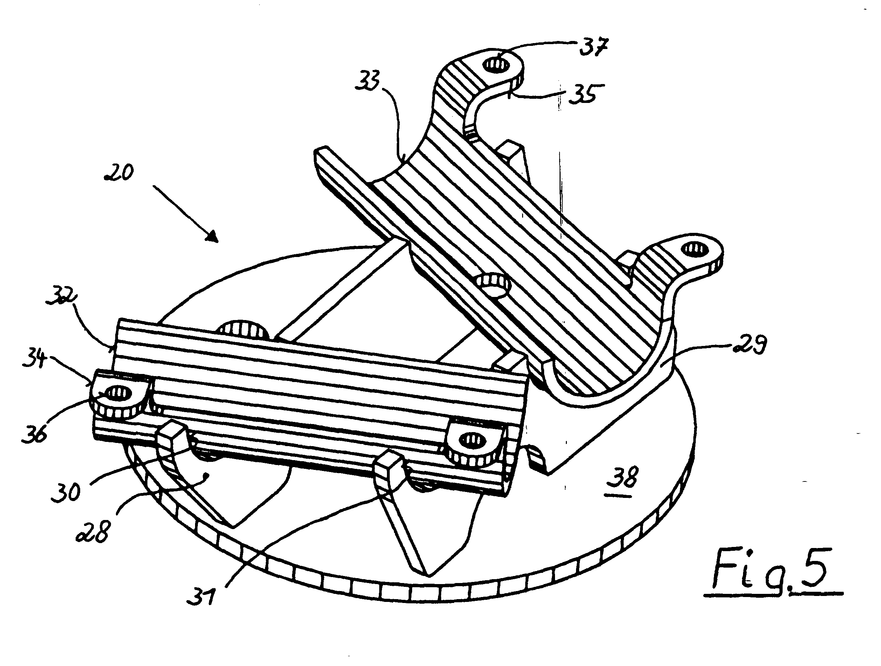

In Fig. 5 ist in perspektivischer Explosionsdarstellung von oben gesehen die oberhalb des Liftbalges 17 befestigte, als untere Halteplatte 20 ausgeführte Quertraverse gezeigt. Diese weist in der hier gezeigten Version zwei zueinander beabstandete Vertikalstege 28, 29 auf, welche oberseitig mit wannenförmigen Ausklinkungen 30, 31 zur Aufnahme von Halbschalen 32, 33 versehen sind, welche wiederum zur formschlüssigen Aufnahme der Schenkel 13, 14 des Dreieckslenkers 12 vorgesehen sind. Die Ausklinkungen 30, 31 sind solcherart angeordnet, dass die innerhalb dieser angeordneten Halbschalen 32, 33 jeweils in Richtung der ungleichen Schenkel 13, 14 des asymmetrischen Dreieckslenkers 12 zu liegen kommen und diesen formschlüssig aufnehmen. Die Halbschalen 32, 33 weisen zudem hiervon abragende Horizontalflansche 34, 35 mit Bohrungen 36, 37 auf, welche zwecks Aufnahme von Befestigungsmitteln mit Bohrungen 39 der oberen Halteplatte 21 korrespondieren, welche auf den Halbschalen 32, 33 der unteren Halteplatte 20 aufliegen. Die obere Halteplatte 21 ist demnach über hier nicht gezeigte Schrauben oder dergleichen an den Halbschalen 32, 33 befestigbar. Die Halbschalen 32, 33 sowie die Vertikalstege 28, 29 und die untere Halteplatte 20 können mittels Verschweißungen miteinander verbunden und insgesamt lösbar oder fest an dem Dreieckslenker 12 angeordnet sein. Alternativ hierzu können andere Ausgestaltungsmöglichkeiten und Befestigungsarten für diese Bauteile 20, 21, 28, 29, 32, 33 vorgesehen sein.

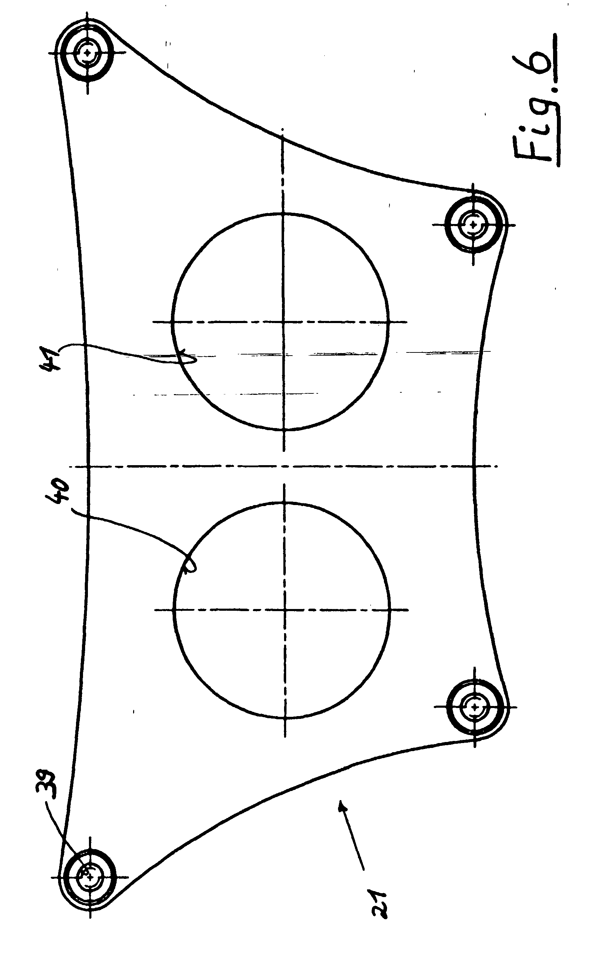

In Fig. 6 ist in Draufsicht die etwa einem gleichschenkligen Trapez entsprechende obere Halteplatte 21 mit in ihrem Zentrum vorgesehenen kreisförmigen Aussparungen 40, 41 versehen, welche zwecks vereinfachter Fixierung des asymmetrischen Dreieckslenkers 12 am Liftbalg 17 zwischen unterer Halteplatte 20 und oberer Halteplatte 21 vorgesehen sind.

## Patentansprüche

1. Liftbare Achse eines Nutzfahrzeuges, insbesondere Lastkraftwagens oder Omnibusses, die einer weiteren Achse vor- oder nachgeordnet und mittels eines einzigen Liftbalges (17) liftbar ist, der unten an einem rahmenfesten Träger (18) und oben gegen einen Dreieckslenker (12) abgestützt ist, dessen beide Schenkel (13, 14) an ihren freien Enden am Rahmen des Nutzfahrzeugs und mit ihrem gemeinsamen Knotenpunkt (15) an der liftbaren Achse (4) angelenkt sind, **gekennzeichnet durch** folgende Merkmale:
a) die beiden Schenkel (13, 14) des Dreieckslenkers (12) sind asymmetrisch zur Mittellängsachse des Nutzfahrzeuges angeordnet,
b) der gemeinsame Knotenpunkt (15) der beiden Schenkel (13, 14) des Dreieckslenkers (12) ist außermittig zu einem der beiden Rahmenlängsträger (1, 2) des Rahmens hingerückt angeordnet,
c) der Dreieckslenker (12) ist mit seinem Knotenpunkt (15) außermittig an der liftbaren Achse (4) angelenkt,
d) der Liftbalg (17) ist in bezug auf die Mittellängsachse des Nutzfahrzeuges außermittig angeordnet,
e) der Liftbalg (17) ist unten am Quersteg (45) eines winkelartigen Trägers (18) abgestützt, der nur an einem der beiden Rahmenlängsträger (1, 2), insbesondere jenem befestigt ist, zu dem der Knotenpunkt (15) des Dreieckslenkers (12) hingerückt ist,
f) der Liftbalg (17) ist oben an einer die beiden Schenkel (13, 14) des Dreieckslenkers (12) verbindenden Quertraverse (20) angeschlossen.

2. Achse nach Anspruch 1, **dadurch gekennzeichnet, dass** der Dreieckslenker (12) in einer Ebene parallel und oberhalb zu einer Ebene unterer Längsträger (8, 9) angeordnet ist, welche die liftbare Achse (4) in Fahrzeuglängsrichtung anlenken.

3. Achse nach einem der Ansprüche 1 und 2, **dadurch gekennzeichnet, dass** der Dreieckslenker (12) mit den freien Enden seiner beiden Schenkel (13, 14) an den Rahmenlängsträgem (1, 2) und/oder an einem dieser miteinander verbindenden Querträger (16) angelenkt ist.

4. Achse nach einem der Ansprüche 1 bis 3, **dadurch gekennzeichnet, dass** der die Rahmenlängsträger (1, 2) miteinander verbindende Querträger (16) zusätzlich an Längslenkerböcken (6, 7) angeschlossen ist, welche die unteren Längslenker (8, 9) der liftbaren Achse (4) lagern.

5. Achse nach einem der Ansprüche 1 bis 4, **dadurch gekennzeichnet, dass** der winkelartigre Träger (18) zusammen mit einem rahmenfesten Luftbalgträger (42), welcher für die Halterung eines die Achse (4) federnd abstützenden Luftbalges (26) vorgesehen ist, ein gemeinsames Bauteil bildet.

6. Achse nach einem der Ansprüche 1 bis 5, **dadurch gekennzeichnet, dass** auf der liftbaren Achse (4) außermittig ein Achsenbock (19) angeordnet ist, an dessen Oberseite der Knotenpunkt (15) des Dreieckslenkers (12) angelenkt ist.

7. Achse nach einem der Ansprüche 1 bis 6, **dadurch gekennzeichnet, dass** die die beiden Schenkel (13, 14) des Dreieckslenkers (12) verbindende Quertraverse (20) durch eine untere Halteplatte gebildet ist, welche lösbar oder fest entweder mit einer Oberseite des Liftbalges (17) oder den Schenkeln (13, 14) verbunden ist und mit einer letztere fixierenden oberen Halteplatte (21) zusammenwirkt.

8. Achse nach Anspruch 7, **dadurch gekennzeichnet, dass** die untere Halteplatte (20) und/oder die obere Halteplatte (21) formschlüssige Aufnahmen (32, 33) zur Fixierung der Schenkel (13, 14) des Dreieckslenkers (12) aufweisen, und dass die obere Halteplatte (21) lösbar mit der unteren Halteplatte (20) verbunden ist, und dass zwecks Fixierung des Dreieckslenkers (12) auf der unteren Halteplatte (20) die Schenkel (13, 14) bereichsweise von der oberen Halteplatte (21) überdeckt sind.

9. Achse nach einem der Ansprüche 1 bis 8, **dadurch gekennzeichnet, dass** die liftbare Achse (4) entweder eine Vorlaufachse, eine Nachlaufachse oder eine liftbare Achse eines Doppelachsaggregates ist, die einer weiteren Achse vor- oder nachgeordnet ist

10. Achse nach eine der Ansprüche 1 bis 9, **dadurch gekennzeichnet, dass** anstelle eines Liftbalges (17) ein Hydraulikzylinder verwendet ist, der von einem Hydrauliksystem des Nutzfahrzeuges her versorgbar ist.

## Claims

1. Lifting axle of a commercial vehicle, in particular a truck or bus, which, arranged in front or behind another axle, can be lifted by means of a single lifting bellow (17) which is supported at the bottom on a carrier (18) attached to the frame and at the top against an A-arm, the two legs (13,14) of which are pivoted to the frame of the commercial vehicle at their free ends and to the lifting axle (4) at their joint intersection (15), **characterised by** the following:
a) The two legs (13, 14) of the A-arm (12) are arranged asymmetrically to the central longitudinal axis of the commercial vehicle,
b) The joint intersection (15) of the two legs (13, 14) of the A-arm (12) is arranged eccentrically towards one of the two frame longitudinal members (1,2) of the frame,
c) The intersection (15) at the A-arm (12) is arranged eccentrically on the lifting axle (4),
d) The lifting bellow (17) is arranged eccentrically with respect to the central longitudinal axis of the commercial vehicle,
e) The lifting bellow (17) is supported at the bottom on the cross strut (45) of a bracket-type carrier (18) which is attached to only one of the two frame longitudinal members (1, 2), in particular to the one towards which the intersection (15) of the A-arm (12) has been moved,
f) The lifting bellow (17) is attached at the top to a traverse (20) connecting the two legs (13, 14) of the A-arm (12),

2. Axle in accordance with claim 1, **characterised in that** the A-arm (12) is arranged in a level parallel and beneath a level of the lower longitudinal members (8,9) which pivots the lifting axle (4) in the longitudinal direction of the vehicle.

3. Axle in accordance with one of the claims 1 and 2, **characterised in that** the A-arm (12) is pivoted by the free ends of its two legs (13, 14) to the frame longitudinal members (1, 2) and/or to a cross member (16) which connects them to each other.

4. Axle in accordance with on of the claims 1 to 3, **characterised in that** the cross member (16) which connects the frame longitudinal members (1, 2) to each other is additionally connected to the longitudinal arm pivot supports (6, 7) which bear the lower longitudinal arms of the lifting axle (4).

5. Axle in accordance with the claims 1 to 4, **characterised in that** the bracket-type carrier (18) forms a joint component together with a air bellow carrier (42) attached to the frame, which our bellow carrier (42) is designed as the holder of an air bellow (26) which supports the axle (4) elastically.

6. Axle in accordance with the claims 1 to 5, **characterised in that** an axle support (19) is arranged eccentrically on the lifting axle (4) on the upper side of which axle support (19) the intersection (15) of the A-arm (12) is pivoted.

7. Axle in accordance with one of the claims 1 to 6, **characterised in that** the traverse member (20) connecting the two legs (13, 14) of the A-arm (12) is formed by a lower holding plate which is connected detachably or securely either to the upper side of the lifting bellow (17) or to the legs (13, 14) and interacts with an upper holding plate (21) which fixes the legs in place.

8. Axle in accordance with claim 7, **characterised in that** the lower holding plate (20) and/or the upper holding plate (21) have form-fitting mounts (32, 33) for the fixing of the legs (13, 14) of the A-arm (12) and that the upper holding plate (21) is connected detachably with the lower holding plate (20) and that in order to fix the A-arm (12) to the lower holding plate (20) sections of the legs (13, 14) are covered by the upper holding plate (21).

9. Axle in accordance with one of the claims 1 to 8, **characterised in that** the lifting axle (4) is either a leading axle, a trailing axle or a lifting axle of a tandem axle unit arranged either in front of or behind another axle.

10. Axle in accordance with one of the claims 1 to 9, **characterised in that** a hydraulic cylinder, which can be supplied from the hydraulic system of the commercial vehicle, is used instead of a lifting bellow (17)

## Revendications

1. Essieu relevable d'un véhicule industriel, en particulier d'un camion ou d'un bus, qui est disposé avant ou après un autre essieu et est relevable au moyen d'un coussin pneumatique unique de relevage (17), qui est en appui en bas sur un support (18) fixé au cadre et en haut contre un triangle de guidage (12) dont les deux bras (13, 14) sont articulées sur ses extrémités libres sur le cadre du véhicule industriel et sur l'essieu relevable à l'aide de leur point d'assemblage commun (15), **caractérisé par** les caractéristiques suivantes :
a) Les deux bras (13, 14) du triangle de guidage (12) sont disposés de manière asymétrique par rapport à l'axe longitudinal médian du véhicule industriel,
b) Le point d'assemblage commun (15) des deux bras (13, 14) du triangle de guidage (12) est disposé de manière excentrée et proche par rapport à l'un des deux longerons (1, 2) du cadre,
c) Le triangle de guidage (12) est articulé de manière excentrée au niveau de l'essieu relevable (4) via son point d'assemblage (15),
d) Le coussin de relevage (17) est disposé de manière excentrée par rapport à l'axe longitudinal médian du véhicule industriel,
e) Le coussin de relevage (17) est en appui en bas sur le montant transversal (45) d'un support (18) de type équerre qui est fixé uniquement sur l'un des deux longerons de cadre (1, 2), en particulier sur celui près duquel se trouve le point d'assemblage (15) du triangle de guidage (12),
f) Le coussin de relevage (17) est raccordé en haut à une traverse (20) liant les deux bras (13, 14) du triangle de guidage (12).

2. Essieu selon la revendication 1, **caractérisé en ce que** le triangle de guidage (12) est disposé dans un plan de manière parallèle et au-dessus par rapport à un plan de longerons inférieurs (8, 9) qui articulent l'essieu relevable (4) dans le sens longitudinal du véhicule.

3. Essieu selon l'une des revendications 1 et 2, **caractérisé en ce que** le triangle de guidage (12) est articulé au niveau des supports longitudinaux du cadre (1, 2) à l'aide des extrémités libres de ses deux bras (13, 14) et/ou au niveau d'un support transversal (16) reliant ceux-ci l'un à l'autre.

4. Essieu selon l'une des revendications 1 à 3, **caractérisé en ce que** le support transversal (16) reliant les supports longitudinaux de cadre (1, 2) est raccordé en supplément à des supports de bras longitudinaux (6, 7) qui accueillent les bras longitudinaux inférieurs (8, 9) de l'essieu relevable (4).

5. Essieu selon l'une des revendications 1 à 4, **caractérisé en ce que** le support (18) de type équerre forme une pièce commune en association avec un support de coussin pneumatique (42) fixé sur le cadre, qui est prévu pour fixer un coussin pneumatique (26) supportant l'essieu (4).

6. Essieu selon l'une des revendications 1 à 5, **caractérisé en ce qu'**est disposé sur l'essieu relevable (4) de manière excentrée un support d'essieu (19) sur la face supérieure duquel est articulé le point d'assemblage (15) du triangle de guidage (12).

7. Essieu selon l'une des revendications 1 à 6, **caractérisé en ce que** la traverse (20) reliant les deux bras (13, 14) du triangle de guidage (12) est formée d'une plate de fixation inférieure qui est raccordée de manière amovible ou fixe soit à une face supérieure du coussin pneumatique (17), soit aux bras (13, 14) et est associée à une plaque de fixation supérieure (21) fixant ces derniers.

8. Essieu selon la revendication 7, **caractérisé en ce que** la plaque de fixation inférieure (20) et/ou la plaque de fixation supérieure (21) présente(nt) des fixations de blocage (32, 33) destinées à la fixation des bras (13, 14) du triangle de guidage (12), **en ce que** la plaque de fixation supérieure (21) est raccordée de manière amovible à la plaque de fixation inférieure et **en ce que** les bras (13, 14) sont recouverts au niveau de certaines zones par la plaque de fixation supérieure (21) en vue de fixer le triangle de guidage (12) sur la plaque de fixation inférieure (20).

9. Essieu selon l'une des revendications 1 à 8, **caractérisé en ce que** l'essieu relevable (4) est soit un essieu poussé, soit un essieu traîné, soit un essieu relevable d'un essieu tandem, lequel est disposé avant ou après un autre essieu.

10. Essieu selon l'une des revendications 1 à 9, **caractérisé en ce que,** à la place d'un coussin pneumatique (17), est employé un cylindre hydraulique qui peut être alimenté par un système hydraulique du véhicule industriel.
